# EUROPEAN PATENT APPLICATION

(11) **EP 1 164 498 A1**
(43) Date of publication of application: **19.12.2001**
(21) Application number: 00305857.5
(22) Date of filing: 11.07.2000
(51) Int. Cl.: G06F 17/30

(54) **Object-oriented document change detection**

(30) Priority: 14.06.2000 US 593396
(71) Applicant: R U Sure Ltd., Tel-Aviv (IL)
(72) Inventor: Hadar, Ori, Haifa (IL); Cohen, Rafael, Tel-Aviv (IL); Akavia, Naama, Tel-Aviv (IL); Ventura, Eli, Moshav Bazra 60944 (IL)
(74) Representative: Hillier, Peter

(57) **Abstract**

A method for detecting a change in a structured document, the method including a) retrieving a structured document at a first time, b) parsing the structured document into a first object hierarchy, c) indicating a first portion of the structured document to be monitored for changes, d) identifying a first object in the first object hierarchy that includes the first portion, e) storing a path of the first object in the first object hierarchy, f) retrieving the structured document at a second time, g) parsing the structured document into a second object hierarchy, h) locating in the second object hierarchy a second object corresponding to the first object, i) locating in the second object a second portion corresponding to the first portion, j) comparing the first and second portions, and k) providing a change notification if the first and second portions are not identical.

## Description

### FIELD OF THE INVENTION

The present invention relates to document change detection and notification.

### BACKGROUND OF THE INVENTION

Tools for detecting changes in documents are well known in the art. The Microsoft DOS "FC" command compares two or more files and displays the differences between them. However, the FC command does not provide unattended, periodic document change detection, nor does it allow users to specify specific portions of a document for which change detection is desired.

U.S. Patent No. 5,898,836 to Freivald, et al. describes a change detection tool in which a user registers a Hypertext Markup Language (HTML) based "web page" by submitting his electronic mail (e-mail) address and the Uniform Resource Locator (URL) of the desired document to a network server. The server fetches the document, and the user selects text on the web page for which change detection is desired. The document is then divided into sections bounded by HTML tags, and a checksum is generated and stored for the user-selected section. During periodic comparisons a fresh copy of the document is retrieved and again divided into sections bounded by HTML tags for which checksums are generated. The freshly-generated checksums are compared to the previously-stored checksums, identifying changed sections as those having non-matching checksums. Changed checksums inside the user-selected section generates a change notification. Re-ordering of sections, as well as format and layout changes, do not generate a change notification when the checksums otherwise match. However, the greater the target text granularity (i.e., the smaller the HTML section), the greater the risk that a duplicate section exists for which no solution is provided.

A method for document change detection is therefore needed that overcomes the disadvantages of the prior art by allowing unattended, periodic document change detection of a user-specified document portion while providing greater accuracy at high target text granularity.

### SUMMARY OF THE INVENTION

There is thus provided in accordance with one embodiment of the present invention a method for detecting a change in a structured document, the method including a) retrieving a structured document at a first time, b) parsing the structured document into a first object hierarchy, c) indicating a first portion of the structured document to be monitored for changes, d) identifying a first object in the first object hierarchy that includes the first portion, e) storing a path of the first object in the first object hierarchy, f) retrieving the structured document at a second time, g) parsing the structured document into a second object hierarchy, h) locating in the second object hierarchy a second object corresponding to the first object, i) locating in the second object a second portion corresponding to the first portion, j) comparing the first and second portions, and k) providing a change notification if the first and second portions are not identical.

In a further aspect of the present invention the parsing step b) includes presenting at least the first portion of the structured document as a hypertext link, and indexing the hypertext link to the first object, and the indicating step c) includes selecting the hypertext link.

In a further aspect of the present invention the identifying step d) includes identifying at least one heading associated with the first portion.

In a further aspect of the present invention the identifying at least one heading step includes identifying at least one common property of a plurality of non-heading portions of the first object, comparing the common property with a corresponding candidate heading portion of the first object, and identifying the heading portion as a heading where the common property of the non-heading candidate portions differs from the corresponding candidate heading portion.

In a further aspect of the present invention the locating step h) includes identifying a heading of the second object that matches the heading of the first portion.

In a further aspect of the present invention the candidate heading portion is either of a row and a column at an edge of the first object.

In a further aspect of the present invention the identifying at least one heading step includes identifying at least one property of an object neighboring the first object that is absent from the first object.

In a further aspect of the present invention the locating step h) includes identifying a heading of the second object that matches the heading of the neighboring object.

The disclosures of all patents, patent applications, and other publications mentioned in this specification and of the patents, patent applications, and other publications cited therein are hereby incorporated by reference.

### BRIEF DESCRIPTION OF THE DRAWINGS

The present invention will be understood and appreciated more fully from the following detailed description taken in conjunction with the appended drawings in which:
Fig. 1 is a simplified flowchart illustration of a method of preparation for document change detection, operative in accordance with a preferred embodiment of the present invention;
Figs. 2A, 2B, and 2C are, respectively, an exemplary document portion, its HTML source-code representation, and its object hierarchy, and which are useful in understanding the method of Fig. 1;
Fig. 3, which is a simplified flowchart illustration of a method of document change detection, operative in accordance with a preferred embodiment of the present invention;
Fig. 4, which is a simplified flowchart illustration of a method of text indication, operative in accordance with a preferred embodiment of the present invention;
Fig. 5 is a simplified flowchart illustration of a method of preparation for document change detection, operative in accordance with a preferred embodiment of the present invention;
Figs. 6A, 6B, and 6C are, respectively, an exemplary document portion, its HTML source-code representation, and its object hierarchy, and which are useful in understanding the method of Fig. 5; and
Fig. 7, which is a simplified flowchart illustration of a method of document change detection, operative in accordance with a preferred embodiment of the present invention.

### DETAILED DESCRIPTION OF PREFERRED EMBODIMENTS

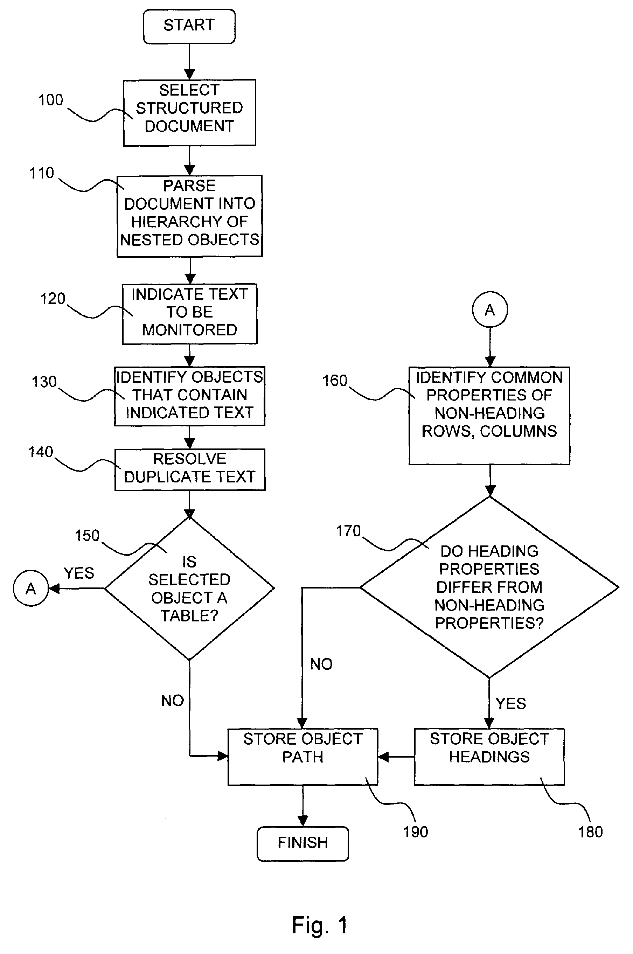

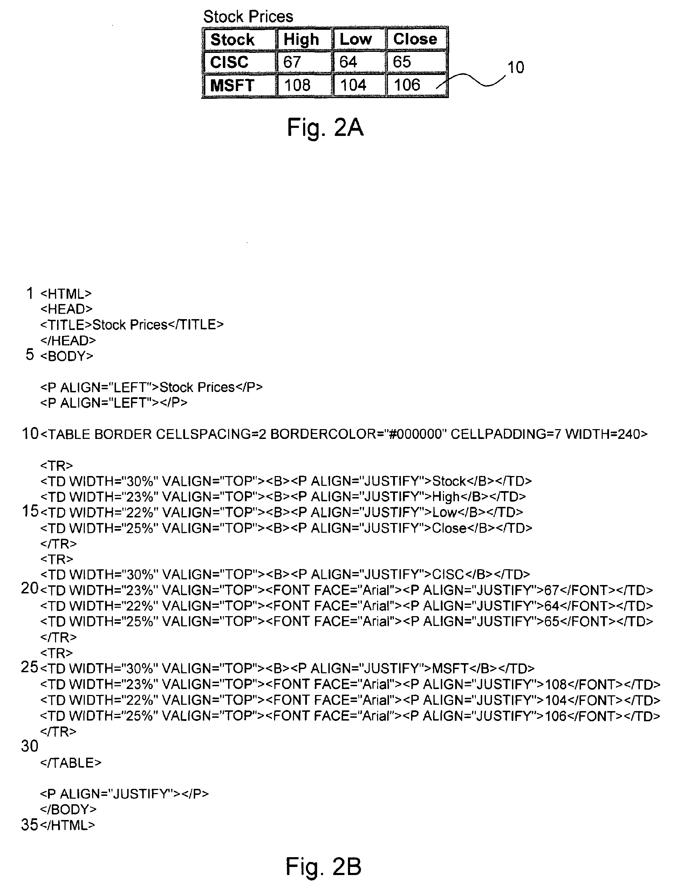

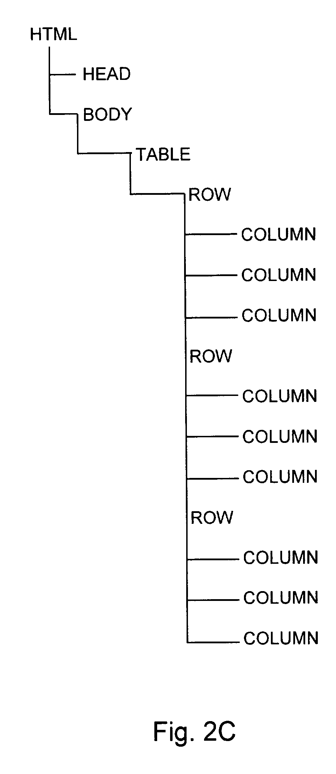

Reference is now made to Fig. 1, which is a simplified flowchart illustration of a method of preparation for document change detection, operative in accordance with a preferred embodiment of the present invention, and additionally to Figs. 2A, 2B, and 2C which are, respectively, an exemplary document portion, its HTML source-code representation, and its object hierarchy, and which are useful in understanding the method of Fig. 1. In the method of Fig. 1 a structured document, such the HTML document seen in Figs. 2A and 2B, is selected by a user (step 100). The document is then parsed using conventional techniques and expressed as a hierarchy of nested document objects (step 110). For example, the hierarchy of document objects shown in Fig. 2A may be expressed as the object hierarchy shown in Fig. 2C where an HTML object is at the top of the hierarchy (lines 1 - 35) within which is a HEAD object (lines 2 - 4) and a BODY object (lines 5 - 34). The BODY object includes a TABLE object (lines 10 - 31). The TABLE object in turn includes first, second, and third ROW objects (at lines 12, 18, and 24). ROW object 1 in turn includes first, second, third, and fourth COLUMN objects (lines 13 - 16), and so on.

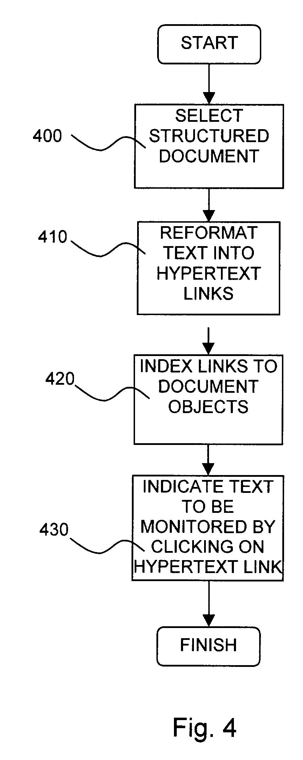

The user then indicates the text within the document upon which change detection is to be provided (step 120). The text indication may be done using conventional techniques, such as by highlighting the text using a pointing device or using other known means. The document object or objects that contain the indicated text are then identified (step 130). Where two document objects include the same indicated text, such as where the same text appears more than once in a single web page, the user may be prompted to select a single "target" object that contains the selected text, such as by displaying the indicated text together with surrounding text, or using any other known prompting technique (step 140). An alternative duplicate text resolution technique is described hereinbelow with reference to Fig. 4. If the target object is a table, then heading resolution is preferably performed (steps 150 - 180). If the target object is not a table, then the indicated text is stored together with the hierarchical "path" of its object within the document (step 190).

If the target object is a table, then ROW and COLUMN headings of each TABLE object are then determined by identifying one or more common properties of non-heading rows and columns (step 160). A non-heading row or column is typically one that is not located at an edge of a table, where "edge" as defined herein may refer to the first or last row or column of a table. Such common properties may include any of font type, color, and/or bold, underline, etc., whose values are identical between non-heading rows and/or columns. The common properties are then compared with those of the candidate heading rows and columns (step 170). A candidate heading row or column is typically one that is located at an edge of the table, typically the top row and/or left column of the table. Where the properties and/or their values are different, the labels of the candidate heading are identified as headings, and are then stored (step 180). For example, in Fig. 2A the text "Stock," "High," "Low," and "Close" are identified as column headings, and "MSFT" and "CISC" are identified as row headings.

Thus, in the example of Fig. 2A, were the MSFT closing price selected at reference numeral 10, its path might be expressed as "The first HTML object, the first TABLE object, the third ROW object, the fourth COLUMN object", and its associated headings as ROW HEADING="MSFT" and COLUMN HEADING="Close".

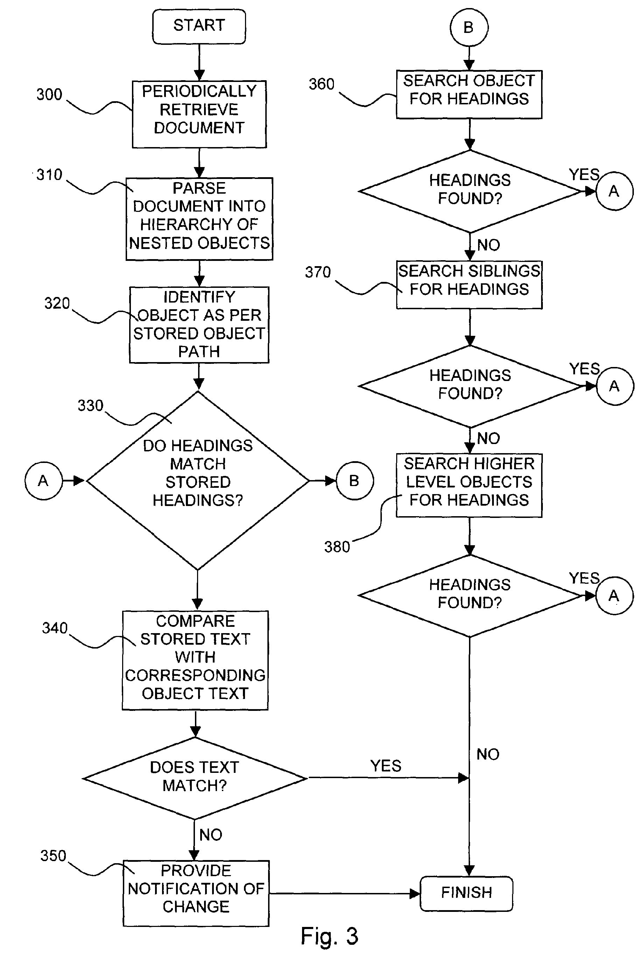

Reference is now made to Fig. 3, which is a simplified flowchart illustration of a method of document change detection, operative in accordance with a preferred embodiment of the present invention. In the method of Fig. 3 the document previously selected by the user and processed in accordance with the method of Fig. 1 is periodically retrieved (step 300). The document is then parsed in the manner described hereinabove with reference to steps 110 - 150 of Fig. 1 (step 310). The object path of the text for which change detection has been requested is then applied to the newly-retrieved document (step 320). Thus, continuing with the preceding example, the fourth COLUMN object of the third ROW object of the first TABLE object of the first HTML object is retrieved. The stored row and/or column headings are then compared to those of the newly-retrieved object (step 330). Should they match, the stored text is then compared to the newly-retrieved text (step 340), with a change notification being sent to the user where a change is detected (step 350). The notification may be effected using any conventional messaging technique, such as via email or Short Message Service (SMS) notification. Should the row and/or column headings at the specified row and column not match, the rows and columns of the object are searched until a matching row and column heading are found (step 360). Should only a row heading match, but not a column heading, or vice versa, the corresponding column/row number may be used. Should no matching row and column headings be found within the object, or should the object path be unresolvable (e.g., no third table object at this level of the object hierarchy) other objects of the same type at the current level in the object hierarchy are similarly searched for matching headings (step 370). Increasingly higher levels of the hierarchy may also be searched in a similar manner (step 380).

Reference is now made to Fig. 4, which is a simplified flowchart illustration of a method of text indication, operative in accordance with a preferred embodiment of the present invention. In the method of Fig. 4 the structured document is selected by the user (step 400). The document is then reformatted such that each text element (i.e., alphabetic, numeric, or alphanumeric word) is converted to a unique, clickable hypertext link (step 410). The links are indexed in relation to the document object which contains the link and, optionally, relative to duplicate text links within the object (step 420). Thus, the user may indicate text within the document simply by clicking on the text link upon which change detection is to be provided (step 430). Since the link is uniquely indexed, text selection may be carried out unambiguously where the text is otherwise duplicated within the document, and no duplication resolution methods are required.

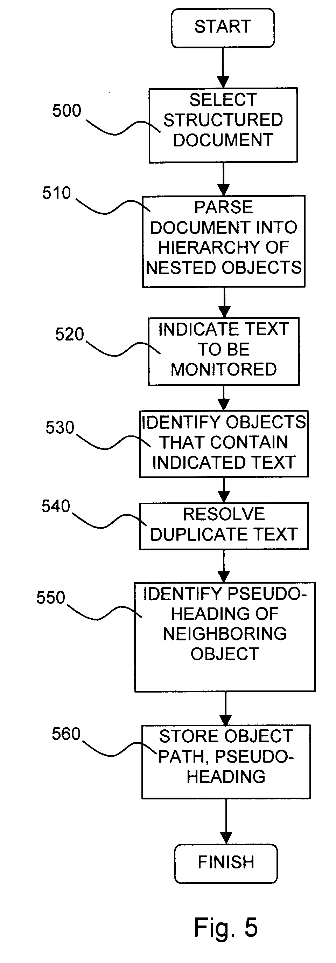

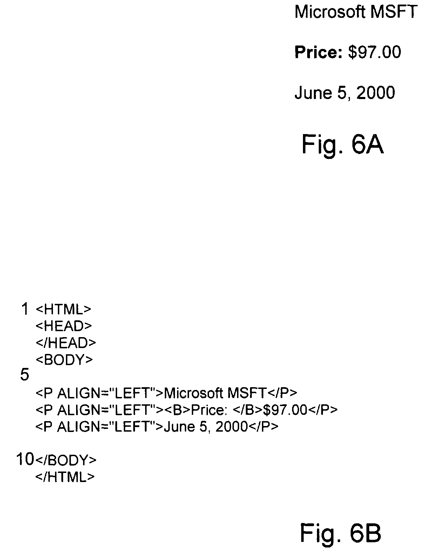

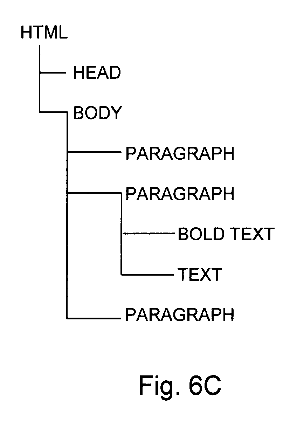

Reference is now made to Fig. 5, which is a simplified flowchart illustration of a method of preparation for document change detection, operative in accordance with a preferred embodiment of the present invention, and additionally to Figs. 6A, 6B, and 6C which are, respectively, an exemplary document portion, its HTML source-code representation, and its object hierarchy, and which are useful in understanding the method of Fig. 5. In the method of Fig. 5 a structured document, such the HTML document seen in Figs. 6A and 6B, is selected by a user (step 500). The document is then parsed using conventional techniques and expressed as a hierarchy of nested document objects (step 510). For example, the hierarchy of document objects shown in Fig. 6A may be expressed as the object hierarchy shown in Fig. 6C where an HTML object is at the top of the hierarchy within which is a HEAD object and a BODY object. The BODY object includes three PARAGRAPH objects (bounded by the tags <P> and </P>). The second PARAGRAPH object in turn includes two objects: a BOLD TEXT object (bounded by the tags <B> and </B>), and a TEXT object following the BOLD TEXT object.

The user then indicates the text within the document upon which change detection is to be provided, such as the second TEXT object within the second PARAGRAPH object in the current example (step 520). The document object or objects that contain the indicated text are then identified (step 530). Where two document objects include the same indicated text, duplicate text resolution techniques such as those described hereinabove may be used until a single target object containing the indicated text is identified (step 540). The closest neighboring object to the left of the target object or immediately preceding the target object is then checked for properties that the target object does not posses, such as bold, font size, italic, etc. One such property is typically selected to represent a "pseudo-heading' of the target object (step 550). The path of the target object and the selected text, as well as the pseudo-heading of the preceding object, are then stored (step 560).

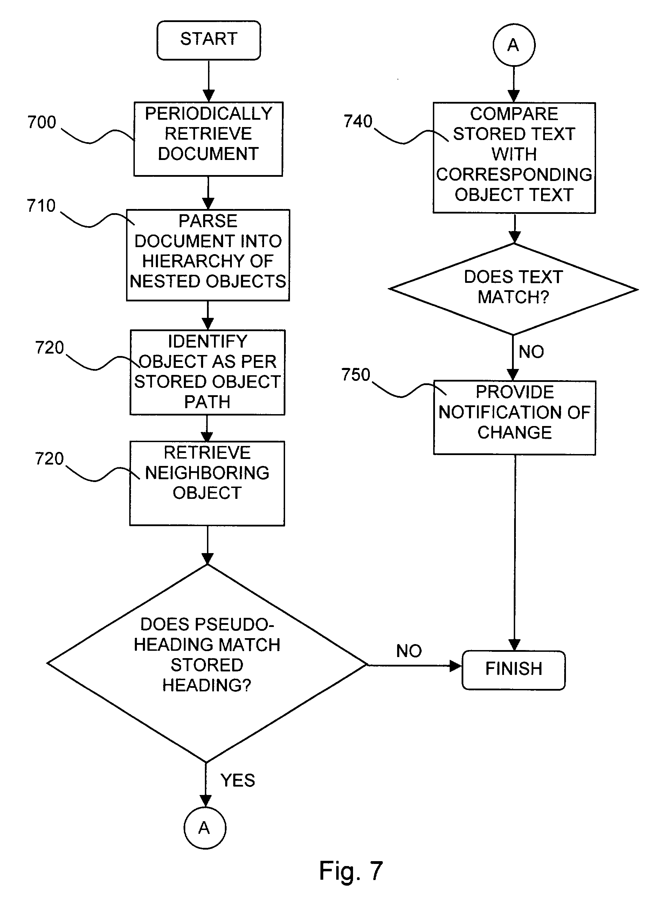

Reference is now made to Fig. 7, which is a simplified flowchart illustration of a method of document change detection, operative in accordance with a preferred embodiment of the present invention. In the method of Fig. 7 the document previously selected by the user is periodically retrieved and processed in accordance with the method of Fig. 5 (step 700). The document is then parsed in the manner described hereinabove with reference to steps 510 - 550 of Fig. 5 (step 710). The object path of the target object is then applied to the newly-retrieved document (step 720). Thus, continuing with the preceding example, the second TEXT object of the second PARAGRAPH object of the first BODY object of the first HTML object is retrieved. The closest neighboring object to the left of the target object or immediately preceding the target object is then checked to see if it matches the stored pseudo-heading of the target object (step 730). Should they match, the stored text of the previously selected target object is then compared to the newly-retrieved text of the corresponding object (step 740), with a change notification being sent to the user where a change is detected (step 750).

It is appreciated that one or more of the steps of any of the methods described herein may be omitted or carried out in a different order than that shown, without departing from the true spirit and scope of the invention.

While the methods and apparatus disclosed herein may or may not have been described with reference to specific hardware or software, the methods and apparatus have been described in a manner sufficient to enable persons of ordinary skill in the art to readily adapt commercially available hardware and software as may be needed to reduce any of the embodiments of the present invention to practice without undue experimentation and using conventional techniques.

While the present invention has been described with reference to a few specific embodiments, the description is intended to be illustrative of the invention as a whole and is not to be construed as limiting the invention to the embodiments shown. It is appreciated that various modifications may occur to those skilled in the art that, while not specifically shown herein, are nevertheless within the true spirit and scope of the invention.

## Claims

1. A method for detecting a change in a structured document, the method comprising:
a) retrieving a structured document at a first time;
b) parsing said structured document into a first object hierarchy;
c) indicating a first portion of said structured document to be monitored for changes;
d) identifying a first object in said first object hierarchy that includes said first portion;
e) storing a path of said first object in said first object hierarchy;
f) retrieving said structured document at a second time;
g) parsing said structured document into a second object hierarchy;
h) locating in said second object hierarchy a second object corresponding to said first object;
i) locating in said second object a second portion corresponding to said first portion;
j) comparing said first and second portions; and
k) providing a change notification if said first and second portions are not identical.

2. A method according to claim 1 wherein said parsing step b) comprises:
presenting at least said first portion of said structured document as a hypertext link; and
indexing said hypertext link to said first object, and wherein said indicating step c) comprises selecting said hypertext link.

3. A method according to claim 1 wherein said identifying step d) comprises identifying at least one heading associated with said first portion.

4. A method according to claim 3 wherein said identifying at least one heading step comprises:
identifying at least one common property of a plurality of non-heading portions of said first object;
comparing said common property with a corresponding candidate heading portion of said first object; and
identifying said heading portion as a heading where said common property of said non-heading candidate portions differs from said corresponding candidate heading portion.

5. A method according to claim 3 wherein said locating step h) comprises identifying a heading of said second object that matches said heading of said first portion.

6. A method according to claim 4 wherein said candidate heading portion is either of a row and a column at an edge of said first object.

7. A method according to claim 3 wherein said identifying at least one heading step comprises:
identifying at least one property of an object neighboring said first object that is absent from said first object.

8. A method according to claim 7 wherein said locating step h) comprises identifying a heading of said second object that matches said heading of said neighboring object.
